# EUROPEAN PATENT SPECIFICATION

(11) **EP 1 652 285 B1**
(45) Date of publication and mention of the grant of the patent: **21.05.2008**
(21) Application number: 04780301.0
(22) Date of filing: 06.08.2004
(51) Int. Cl.: H02K 33/16, G02B 7/00

(54) **BI-STABLE MAGNETIC LATCH**
BISTABILES MAGNET-LATCH
VERROU MAGNETIQUE BISTABLE

(30) Priority: 06.08.2003 US 636718
(43) Date of publication of application: 03.05.2006
(73) Proprietor: Honeywell International Inc., Morristown, NJ 07960 (US)
(72) Inventor: OSTERBERG, David, A., Sun City West AZ 85375 (US)
(74) Representative: Haley, Stephen
(86) International application number: PCT/US2004/025444
(87) International publication number: WO 2005/015713

(56) References cited:
- EP-A- 0 652 629
- CH-A- 583 475
- FR-E- 81 416
- US-A- 4 529 270
- US-A1- 2002 027 393
- US-B1- 6 377 380

## Description

### TECHNICAL FIELD

The present invention generally relates to magnetic latches, and more particularly relates to limited rotation active magnetic devices.

### BACKGROUND

There are certain situations for which a bi-stable latch is particularly suited. For example there is a need for a device that could be used to hold a refrigerator door open or closed, or a deployable appendage deployed or stowed. Another, use for the bi-stable latch of the present invention is to provide high speed switching for optical elements. Such a switching mechanism is provided in U.S. Patent Application Serial Number 10/103,534 to David A. Osterberg, filed March 20, 2002, and assigned to the assignee of, the present invention. Various systems and devices such as, for example, optical test instruments and equipment, include one or more optical elements, which may be provided to implement, for example, optical filtering. In some of these systems, it may be desirable to simultaneously switch one or more optical elements into and out of an optical path. Preferably, this optical element switching operation is performed relatively rapidly.

In the past, rapid and simultaneous optical element switching has been accomplished using, for example, a wheel mechanism that is configured to rotate the optical elements into and out of the optical path. In one exemplary wheel mechanism embodiment, the optical elements are arranged around the perimeter of a wheel. As different optical elements are to be moved into and out of the optical axis, a motor or other driver rotates the wheel, stopping when the desired optical element is in the optical path.

Although wheel mechanisms generally operate safely, these mechanisms also suffer certain disadvantages. For example, the configuration of many of these wheel mechanisms provides for sequential, rather than random, access to the elements at the edges of the wheel. As a result, the amount of time and energy that may be used to switch one element into the optical path and another optical element out of the optical path can be undesirably high. This may be most pronounced when the wheel is used to move optical elements into and out of the optical paths that are located on opposite sides of the wheel.

Another drawback of some known wheel mechanisms is that rapid movement of the wheel can cause disturbances in the system: These disturbances can result in, for example, image blur. This can be a significant factor in applications that implement precise optical system control such as, for example, in satellite applications. To compensate for the disturbances a rapidly moving wheel may cause, some systems may implement long settling periods after wheel movement. Other systems may use complex force compensation and/or isolation mechanisms, which can increase the system complexity and, in some cases, simultaneously decrease system reliability. Moreover, some of these complex mechanisms may also dissipate significant power, which can negatively impact the thermal profile of the system.

FR81416 and CH583475 both disclose magnetic bi-stable latches with upper and lower stators and rotors position between the stators. Each of the stators has a magnetic assembly with poles of magnetic material.

FR81416 discloses a vibrating motor comprising:
an upper stator and a lower stator;
a rotor disposed between the upper stator and lower stator and adapted for limited rotation between a first position and a second position;
each of the upper stator and lower stator comprising a magnetic assembly having at least two inner poles and two outer poles of magnetic material, and at least one stator having a coil disposed in relation to the inner poles and the outer poles to form an electromagnet;
the rotor having at least a first permanent magnet and a second permanent magnet mounted thereon.

Hence, there is a need for a switching mechanism that addresses one or more of the above-noted drawbacks. Namely, a switching mechanism that supplies relatively high-speed switching speeds, and/or that dissipates relatively low amounts of power, and/or does not cause significant system disturbances. The present invention addresses one or more of these needs. Furthermore, other desirable features and characteristics of the present invention will become apparent from the subsequent detailed description and the appended claims, taken in conjunction with the accompanying drawings and the foregoing technical field and background.

The present invention provides a magnetic bi-stable latch comprising:
an upper stator and a lower stator;
a rotor disposed between the upper stator and lower stator and adapted for limited rotation between a first latched position and a second latched position;
each of the upper stator and lower stator comprising a magnetic assembly having at least two inner poles and two outer poles of magnetic material, and at least one stator having a coil disposed in relation to the inner poles and the outer poles to form an electromagnet;
the stators positioned such that the outer poles of the upper stator align with the inner poles of the lower stator and the inner poles of the upper stator align with the outer poles of the lower stator;
the rotor having at least a first permanent magnet and a second permanent magnet mounted thereon and disposed such that in the first latched position the first permanent magnet is aligned with an outer pole of the upper stator and an inner pole of the lower stator and the second permanent magnet is aligned with an inner pole of the upper stator and an outer pole of the lower stator;
thereby forming a magnetic circuit including the first permanent magnet, the outer and inner poles of the upper and lower stators, and the second permanent magnet, the magnetic flux of the circuit thus latching the rotor in a first position.

The present invention will hereinafter be described in conjunction with the following drawing figures, wherein like numerals denote like elements, and
FIG. 1. Is a drawing of one portion of a magnetics assembly usable in the present invention;
FIG. 2 is a drawing showing two of the magnetics assemblies of FIG. 1 together with a plurality of magnets;
FIG. 3 is a drawing of a rotor assembly usable in the present invention, together with an optical filter arrangement; and
FIG. 4 is a sketch showing a complete but simplified exploded (for clarity) view of the bi-stable latch and the magnetic paths.
FIG. 5A and FIG. 5B show, respectively, top views of the planes of contact of the components of the bi-stable latch having two inner poles and two outer poles on each of the upper and lower stator magnetic assemblies.

The following detailed description is merely exemplary in nature and is not intended to limit the invention or the application and uses of the invention.

The device of the present invention will be described in term of a preferred embodiment, but it is understood that other configurations may be used. The device described has two stators and a rotor intermediate the stators. Each stator has a plurality of pole pieces (also called spiders) and is designed with an even number of poles. The number of poles can be selected in accordance with the angular travel required between poles. In this case the preferred embodiment utilizes eight poles and thirty degrees of rotation. More poles decrease the size of the device (for the same latching moment) but reduce the permitted travel of the rotor.

The device of the present invention is applied herein to a fast pivot mechanism utilized to latch a pivoted device in one of two positions. The device will be seen to have several advantages over previous designs, for example wheel designs or other magnetic latch designs. First, the latch of the present invention applies a moment around the rotation axis of the rotor rather than a force. Internally the device applies several forces in different directions summing to zero, however they are coupled to apply a pure moment. The unique magnetic path within the device, as will be discussed in some detail later, allows two stators to be used that have external actuation coils. Since the coils are external there are few limitations as to how large they may be. Simply extending the magnetic path of the stators and installing a larger coil will reduce the power and increase the efficiency of the device, by reducing.the power necessary to unlatch the device from one of its two positions. Hereinafter the two stators are described as identical stators though they need not be identical. For example, as described above, and in accordance with a preferred embodiment of the invention, two coils are described, one each in association with the two stators. It is possible, however, to have only one coil, associated with only one of the stators, to accomplish the objectives of the invention.

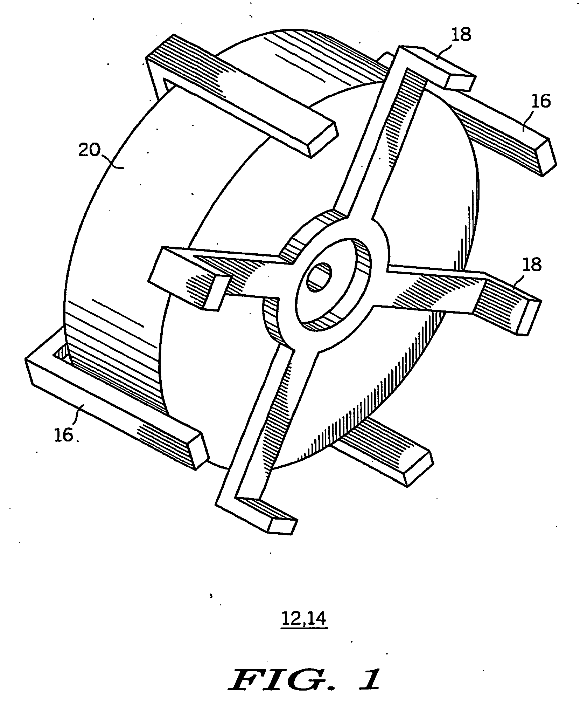

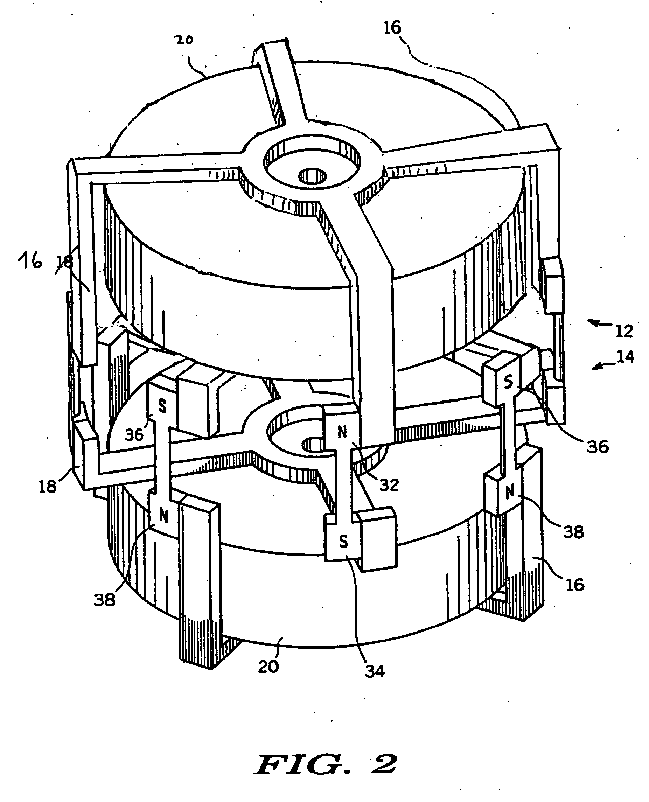

For purposes of this detailed description of a preferred embodiment, the structure and operation of the bi-stable latch will be described using all three of FIG. 1, FIG.2, and FIG. 3 since different components of the latch are shown more clearly in different drawings. FIG. 1 is a drawing of a magnetics assembly according to the invention. Each of the magnetic assemblies 12 and 14 comprises (FIG. 1 and FIG. 2) outer pole pieces or "spiders" 16 and inner pole pieces or "spiders" 18 and a toroidal coil 20. Again, as noted previously, the invention may be practiced with the use of only one coil associated with one of the stators.

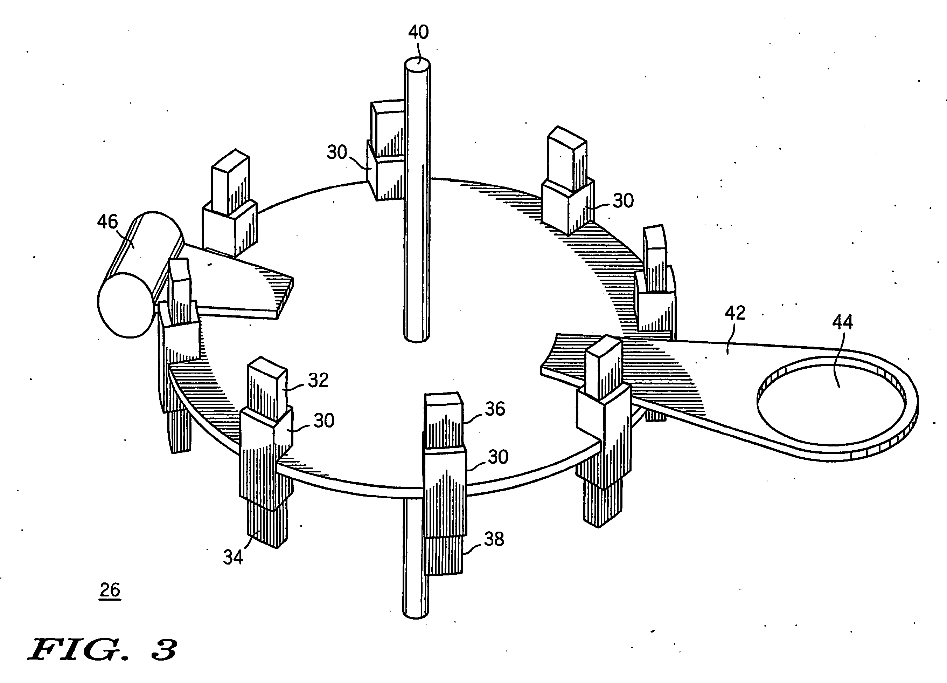

The actual latch of the invention comprises two such magnetic assemblies, a top assembly 12 and a bottom assembly 14 as is shown in FIG. 2. Between the upper magnetics assembly and the lower magnetics assembly is a rotor assembly 26 (not shown in FIG. 2 for purposes of clarity, but shown in FIG. 3) that supports a plurality of permanent magnets 30, including alternating upper pole (north) pote pieces 32, lower pole (south) pole pieces 34, upper pole (south) pole pieces 36, and lower pole (north) pole pieces 38. The rotor assembly 26 is attached to a rotor shaft 40 as shown in FIG. 3. The rotor shaft 40 may be any shaft affixed to the rotor 26 including a shaft that is capably of applying torsion to the rotor 26 when the rotor is in either of its terminal or latched positions, such as a torsion bar or a shaft biased by a torsion spring, for example. The rotor shaft need not be a shaft under torsion, however, as the repulsive effect of the electromagnet, as will be described in more detail later, begins the movement of the rotor from a first position to a second position. The use of a torsion rod, or a rotor shaft under torsion makes the switching from a first latched position to a second latched position faster.

Also shown in FIG. 3 is a holder arm 42 attached to the rotor assembly 26 such that as the rotor assembly rotates, an optical filter or other device 44 is rotated in or out of registration with a desired location. The rotor assembly 26 may also comprise a counterweight 46 to assist in providing minimum disturbance to the assembly during motion.

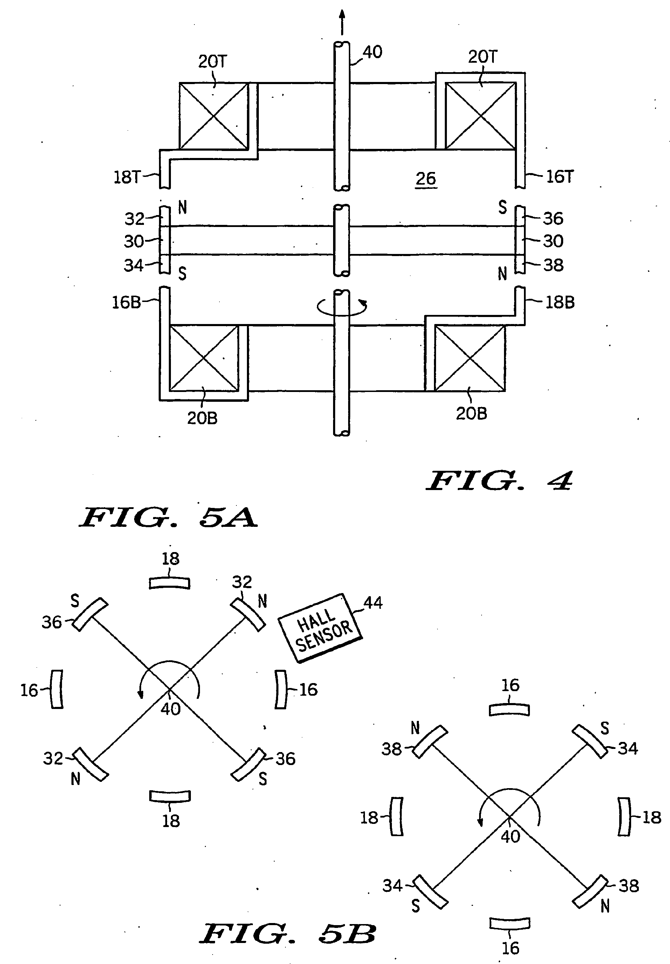

The stators 16 and 18 of FIG. 1 and FIG. 2 are shown as identical, but as previously noted, they need not be. They must, however, have similar magnetic paths. The toroidal coil 20 has two iron pole pieces 16, 18 wrapped around it as shown in the FIGS. The pole pieces 16, 18 are designed with an even number of poles (here, eight) and joined with the coil 20 to form the stator assembly. As noted, the number of poles can be selected for the angular travel required of the pivotable member 42. More poles decrease the size (for the same latching moment) but reduce the travel. Relative to the alignment of figure 2 the upper stator 12 and the lower stator 14 are joined in the assembly of the latch, one of the stators is rotated one pole so that an inner pole on one stator aligns with an outer pole on the other stator, as shown in figure 4.

Each of the stator magnetic assemblies has four pole pairs making eight pole pairs for the two stators. The rotor 26 may be machined from a non-magnetic material such as aluminum and has the same number of pole pairs as the spiders, in this case eight. Each of the eight magnets 30, of course has two poles associated with it so that when the stators and rotor are assembled each magnet aligns with an inner pole of one stator and an outer pole of the other stator. The magnets 30 are installed in the rotor in alternating directions so that when viewed from the top or the bottom the polarities alternate between north and south as shown in FIG. 2 and FIG. 3. Iron pole pieces 32, 34, 36, 38 previously described are installed at each end of each individual magnet 30 mating with the iron poles of the spiders 16, 18.

When assembled the rotor 26 is free to rotate while supported on rotor shaft 40 between the poles of the spiders 22 and 24. The pole pieces of the spiders 16, 18 serve as detents to the rotation of the rotor 26. The thickness of the poles in this example was designed to allow thirty degrees of free rotation, although as previously noted, the number of stator poles also determines the degree of free rotation of the rotor 26.

FIG. 4 is a schematic diagram showing the magnetic circuit established during the operation of the latch when the rotor is at either of its latched positions. The schematic shows only two each of the upper and lower pole pieces, it being understood that in the preferred embodiment there are eight of each and that any even number of pole pieces may be used depending upon the rotational angle desired, etc. The schematic is also shown as partially exploded for clarity, it being understood that the pole pieces of the upper and lower magnetics assemblies may act as detents to the pole pieces of the rotor magnets to limit the rotation of the rotor.

The rotor 26, or, more precisely, the magnets 30 and poles 32, 34, 36, and 38, complete the magnetic circuit that starts at a rotor magnet 30, flows through rotor pole piece 36, then follows the outer pole spider 16T through one coil 20T (of the top magnetic assembly 22 in this example) then out the inner pole 18T across the second magnet 30 (in an additive direction) and through the outer pole 16B of the bottom magnetic assembly, across the bottom magnetic assembly coil 20B through the Inner pole piece 18B and then through magnet 30 of that assembly and back out the rotor pole piece 38 to the magnet 30 where it started. As previously noted, it is possible to eliminate one of the coils, in which case the circuit is completed through the pole pieces of the stator that lacks a coil. Since in the preferred embodiment there are four poles (and eight pole pieces) in each of the upper and lower magnetic assemblies, there are four parallel paths through which the magnetic circuit is completed, each path utilizing two upper and two lower pole pieces. The rotor 26, of course, rotates around rotor shaft 40.

The magnetic reluctance causes the magnets 30 of the rotor 26 to be attracted to the pole respective upper or lower pole pieces of the stators at each end of its travel, generating a bi-stable magnetic detent at two locations. The latch is releated by driving a current pulse through the coils 20 in a direction opposing the flux in the iron of the pole pieces 16, 18, 32, 34, 36, and 38. The opposing flux generated by the electromagnet counteracts the flux of the permanent magnets and, if sufficiently strong, can have a repulsive effect upon the magnets, driving them toward the other latching position. The coils 20 may also be energized in the other direction to release from the opposite detents. Thus a positive pulse causes the latch to switch to one state and the opposite pulse causes it to switch to the other state, the torsion of the rotor shaft in this example providing additional momentum to complete the switch. The circuit could be used without a torsion spring mechanism applied to the rotor shaft, however, but the power consumption would usually be greater in such a configuration as the latching attraction would by necessity be greater.

FIG. 5A and FIG. 5B show, respectively, top views of the planes of contact of the components of a bi-stable latch in accordance with the invention, but having two inner poles and two outer poles on each of the upper and lower stator magnetic assemblies. These diagrams, shown with the rotor between detents at the upper and lower poles, show the relative positioning among the various poles of the magnets of the rotor 26 and the upper and lower magnetic assembly spiders 16 and 18. In FIG. 5A and 5B inner poles 16 and outer poles 18 of the top and bottom magnetic assemblies are shown, as are the pole pieces 32, 34, 36 and 38 of the rotor magnets 30. The magnets 30, of course cannot be seen in these views as they are below the pole pieces. As can be appreciated, as the rotor pole 32, for example moves toward inner pole 18 (FIG. 5A) the pole 18 acts as a detent stopping the rotation of the rotor. Since there are four pole pairs in each of the upper and lower assemblies and eight pole pairs in the rotor, contact is made with all poles simultaneously thus forming four parallel flux paths and two detents.

Should active control be desired to allow more precise control a flux sensor, such as a Hall sensor 44 (in FIG. 5A), may be installed in the gap to sense magnetic flux. This sensor can then be used to control the detent torque since flux density is approximately proportional to output torque. During passive operation i.e., when the coil is not energized, this sensor also gives an indication of the state of the device. The two detent points give a strong positive and negative flux reading while a near-zero flux indication represents a rotor half-way between the detents.

While at least one exemplary embodiment has been presented in the foregoing detailed description, it should be appreciated that a vast number of variations exist It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing the exemplary embodiment or exemplary embodiments. It should be understood that various changes can be made in the function and arrangement of elements without departing from the scope of the invention as set forth in the appended claims.

## Claims

1. A magnetic bi-stable latch comprising:
an upper stator (12) and a lower stator (14);
a rotor (26) disposed between the upper stator (12) and lower stator (14) and adapted for limited rotation between a first latched position and a second latched position;
each of the upper stator (12) and lower stator (14) comprising a magnetic assembly having at least two inner poles (18) and two outer poles (16) of magnetic material, and at least one stator (12, 24) having a coil (20) disposed in relation to the inner poles (18) and the outer poles (16) to form an electromagnet;
the stators (12,14) positioned such that the outer poles (16) of the upper stator (12) align with the inner poles (18) of the lower stator (14) and the inner poles (18) of the upper stator (12) align with the outer poles (16) of the lower stator (14);
the rotor (26) having at least a first permanent magnet (30) and a second permanent magnet (30) mounted thereon and disposed such that in the first latched position the first permanent magnet (30) is aligned with an outer pole (16) of the upper stator (12) and an inner pole (18) of the lower stator (14) and the second permanent magnet is aligned with an inner pole (18) of the upper stator (12) and an outer pole (16) of the lower stator (14);
thereby forming a magnetic circuit including the first permanent magnet, the outer and inner poles (16,18) of the upper and lower stators (12, 14), and the second permanent magnet (30), the magnetic flux of the circuit thus latching the rotor (26) in a first position.

2. A magnetic bi-stable latch as set forth in claim 1, wherein the coil (20) is energized with an electrical current of a polarity such that a flux is generated in the magnetic elements to overcome the latching flux, thereby releasing the rotor (26) from its first latched position.

3. A magnetic bi-stable latch as set forth in claim 2, wherein, upon release from the first latched position the rotor (26) rotates to the second latched position.

4. A magnetic bi-stable latch as set forth in claim 3, wherein the coil (20) is energized with an electrical current of a polarity such that a flux is generated in the magnetic elements to overcome the latching flux, thereby releasing the rotor (26) from its second latched position.

5. A magnetic bi-stable latch as set forth in claim, 1 wherein the rotor (26) is mounted for rotation about a rotor shaft (40).

6. A magnetic bi-stable latch as set forth in claim 5, wherein the rotor shaft (40) is under rotational torsion when the rotor (26) is in the first latched position and in the second latched position, thereby aiding the release from the latched positions.

7. A magnetic bi-stable latch as set forth in claim 6, wherein the torsion is provided by a torsion spring.

8. A magnetic bi-stable latch as set forth in claim 6, wherein the rotor shaft (40) is a torsion rod.

9. A magnetic bi-stable latch as set forth in claim 1, wherein the upper stator (12) and the lower stator (14) each comprise four inner poles (18) and four outer poles (16) and the rotor (26) comprises eight permanent magnets (30).

10. A magnetic bi-stable latch as set forth in claim 1, further comprising a second coil (20) associated with the other stator to form a second electromagnet.

## Patentansprüche

1. Magnetische bistabile Verriegelungsvorrichtung, umfassend:
einen oberen Stator (12) und einen unteren Stator (14) ;
einen zwischen dem oberen Stator (12) und dem unteren Stator (14) angeordneten Rotor (26), der für eine begrenzte Drehung zwischen einer ersten verriegelten Stellung und einer zweiten verriegelten Stellung ausgelegt ist;
wobei der obere Stator (12) und der untere Stator (14) jeweils folgendes umfassen: eine magnetische Baugruppe mit mindestens zwei inneren Polen (18) und zwei äußeren Polen (16) aus magnetischem Material und mindestens einen Stator (12, 24) mit einer in Beziehung zu den inneren Polen (18) und den äußeren Polen (16) zur Bildung eines Elektromagneten angeordneten Spule (20);
wobei die Statoren (12, 14) so positioniert sind, daß sich die äußeren Pole (16) des oberen Stators (12) mit den inneren Polen (18) des unteren Stators (14) ausrichten und sich die inneren Pole (18) des oberen Stators mit den äußeren Polen (16) des unteren Stators (14) ausrichten;
wobei der Rotor (26) mindestens einen ersten Permanentmagneten (30) und einen zweiten Permanentmagneten (30) darauf angebracht und so angeordnet aufweist, daß in der ersten verriegelten Stellung der erste Permanentmagnet (30) mit einem äußeren Pol (16) des oberen Stators (12) und einem inneren Pol (18) des unteren Stators (14) ausgerichtet ist und der zweite Permanentmagnet mit einem inneren Pol (18) des oberen Stators (12) und einem äußeren Pol (16) des unteren Stators (14) ausgerichtet ist;
wodurch ein magnetischer Schaltkreis gebildet wird, der den ersten Permanentmagneten, die inneren und äußeren Pole (16, 18) des oberen und des unteren Stators (12, 14) und den zweiten Permanentmagneten (30) enthält, wobei der magnetische Fluß des Schaltkreises somit den Rotor (26) in der ersten Stellung verriegelt.

2. Magnetische bistabile Verriegelungsvorrichtung nach Anspruch 1, wobei die Spule (20) mit einem elektrischen Strom einer derartigen Polarität bestromt wird, daß ein Fluß in den magnetischen Elementen erzeugt wird, um den verriegelnden Fluß zu überwinden, wodurch der Rotor (26) aus seiner ersten verriegelten Stellung gelöst wird.

3. Magnetische bistabile Verriegelungsvorrichtung nach Anspruch 2, wobei sich der Rotor (26) bei Lösung aus der ersten verriegelten Stellung in die zweite verriegelte Stellung dreht.

4. Magnetische bistabile Verriegelungsvorrichtung nach Anspruch 3, wobei die Spule (20) mit einem elektrischen Strom einer derartigen Polarität bestromt wird, daß ein Fluß in den magnetischen Elementen erzeugt wird, um den verriegelnden Fluß zu überwinden, wodurch der Rotor (26) aus seiner zweiten verriegelten Stellung gelöst wird.

5. Magnetische bistabile Verriegelungsvorrichtung nach Anspruch 1, wobei der Rotor (26) für eine Drehung um eine Rotorwelle (40) angebracht ist.

6. Magnetische bistabile Verriegelungsvorrichtung nach Anspruch 5, wobei die Rotorwelle (40) unter Drehtorsion steht, wenn sich der Rotor (26) in der ersten verriegelten Stellung befindet, wodurch die Lösung aus den verriegelten Stellungen erleichtert wird.

7. Magnetische bistabile Verriegelungsvorrichtung nach Anspruch 6, wobei die Torsion durch eine Torsionsfeder bereitgestellt wird.

8. Magnetische bistabile Verriegelungsvorrichtung nach Anspruch 6, wobei die Rotorwelle (40) ein Drehstab ist.

9. Magnetische bistabile Verriegelungsvorrichtung nach Anspruch 1, wobei der obere Stator (12) und der untere Stator (14) jeweils vier innere Pole (18) und vier äußere Pole (16) umfassen und der Rotor (26) acht Permanentmagnete (30) umfaßt.

10. Magnetische bistabile Verriegelungsvorrichtung nach Anspruch 1, ferner mit einer zweiten Spule (20), die mit dem anderen Stator assoziiert ist, um einen zweiten Elektromagneten zu bilden.

## Revendications

1. Verrou magnétique bistable comprenant :
un stator supérieur (12) et un stator inférieur (14) ;
un rotor (26) disposé entre le stator supérieur (12) et le stator inférieur (14) et adapté pour une rotation limitée entre une première position verrouillée et une deuxième position verrouillée ;
chacun du stator supérieur (12) et du stator inférieur (14) comprenant un assemblage magnétique comportant au moins deux pôles internes (18) et deux pôles externes (16) en matériau magnétique, et au moins un stator (12, 24) comportant une bobine (20) disposée par rapport aux pôles internes (18) et aux pôles externes (16) pour former un électroaimant ;
les stators (12, 14) étant positionnés de telle sorte que les pôles externes (16) du stator supérieur (12) s'alignent sur les pôles internes (18) du stator inférieur (14) et les pôles internes (18) du stator supérieur (12) s'alignent sur les pôles externes (16) du stator inférieur (14) ;
le rotor (26) comportant au moins un premier aimant permanent (30) et un deuxième aimant permanent (30) monté par-dessus et disposé de telle sorte que, dans la première position verrouillée, le premier aimant permanent (30) est aligné sur un pôle externe (16) du stator supérieur (12) et un pôle interne (18) du stator inférieur (14) et le deuxième aimant permanent est aligné sur un pôle interne (18) du stator supérieur (12) et un pôle externe (16) du stator inférieur (14) ;
formant de ce fait un circuit magnétique comprenant le premier aimant permanent, les pôles externes et internes (16, 18) des stators supérieur et inférieur (12, 14) et le deuxième aimant permanent (30), le flux magnétique du circuit verrouillant ainsi le rotor (26) dans une première position.

2. Verrou magnétique bistable selon la revendication 1, dans lequel la bobine (20) est alimentée avec un courant électrique d'une polarité telle qu'un flux est généré dans les éléments magnétiques pour surmonter le flux de verrouillage, libérant de ce fait le rotor (26) de sa première position verrouillée.

3. Verrou magnétique bistable selon la revendication 2, dans lequel, lors de la libération de la première position verrouillée, le rotor (26) tourne jusqu'à la deuxième position verrouillée.

4. Verrou magnétique bistable selon la revendication 3, dans lequel la bobine (20) est alimentée avec un courant électrique d'une polarité telle qu'un flux est généré dans les éléments magnétiques pour surmonter le flux de verrouillage, libérant de ce fait le rotor (26) de sa deuxième position verrouillée.

5. Verrou magnétique bistable selon la revendication 1, dans lequel le rotor (26) est monté pour une rotation autour d'un arbre de rotor (40).

6. Verrou magnétique bistable selon la revendication 5, dans lequel l'arbre de rotor (40) subit une torsion rotationnelle quand le rotor (26) se trouve dans la première position verrouillée et dans la deuxième position verrouillée, facilitant de ce fait la libération des positions verrouillées.

7. Verrou magnétique bistable selon la revendication 6, dans lequel la torsion est assurée par un ressort de torsion.

8. Verrou magnétique bistable selon la revendication 6, dans lequel l'arbre de rotor (40) est une barre de torsion.

9. Verrou magnétique bistable selon la revendication 1, dans lequel le stator supérieur (12) et le stator inférieur (14) comprennent chacun quatre pôles internes (18) et quatre pôles externes (16), et le rotor (26) comprend huit aimants permanents (30).

10. Verrou magnétique bistable selon la revendication 1, comprenant en outre une deuxième bobine (20) associée à l'autre stator pour former un deuxième électroaimant.
